# FASCICULE DE BREVET EUROPEEN

(11) **EP 3 161 215 B1**
(45) Date de publication et mention de la délivrance du brevet: **04.07.2018**
(21) Numéro de dépôt: 15726114.0
(22) Date de dépôt: 28.05.2015
(51) Int. Cl.: E02D 11/00, E02D 7/02

(54) **PATTE DE FIXATION POUR ELEMENT DE CONSTRUCTION**
KLAMMER ZUR BEFESTIGUNG VON BAUTEILEN
CLAMP FOR MOUNTING OF CONSTRUCTION ELEMENTS

(30) Priorité: 26.06.2014 BE 201400495
(43) Date de publication de la demande: 03.05.2017
(73) Titulaire: RBS SPRL, 5310 Eghezée (BE)
(72) Inventeur: SERVAIS, Pierre, 5310 Eghezée (BE); SERVAIS, Bernard, 1367 Ramillies (BE)
(74) Mandataire: Pronovem
(86) Numéro de dépôt international: PCT/EP2015/061846
(87) Numéro de publication internationale: WO 2015/197302

(56) Documents cités:
- DE-U1-202004 003 022

## Description

### Objet de l'invention

La présente invention relève du domaine technique de la construction.

Elle concerne plus particulièrement une patte de fixation à un support fileté intérieurement, de préférence pour une vis de fondation. La patte de fixation de l'invention permet d'y fixer un élément de construction léger telle qu'une poutre, un panneau ou une dalle, etc. entrant dans la fabrication d'une terrasse, d'un abri de jardin, d'un panneau photovoltaïque, etc.

### Etat de la technique

Des plots de fondations à visser dans le sol, aussi appelés vis de fondation, sont connus par exemple des documents DE 20 2004 003 022 U1 et US 2011/0250977 A1. De tels plots sont constitués par un corps en métal ou en matière plastique, destiné à être vissé dans le sol et recevant, dans sa partie supérieure un élément de construction plus ou moins léger tel qu'une poutre, une planche ou un panneau.

Cependant, de tels dispositifs ne permettent pas la mise à niveau des éléments qu'ils supportent. Or, il peut être nécessaire de procéder à un ajustement de ces éléments après la pose suite à un mouvement du terrain par exemple.

A cette fin, il existe des dispositifs constitués de plots réglables pour des éléments de construction préfabriqués comme des blocs d'appui. Le document CA 1084280 divulgue un tel dispositif dont la pose, sur un support tel qu'une fondation de pieux en béton par exemple, est à réaliser par un professionnel du domaine.
Un élément de mise à niveau comprend une plaque de base ayant une ouverture pour recevoir le sommet d'un pieu affleurant au-dessus du niveau du sol et des parois latérales ayant des indentations pour recevoir des blocs d'appui préfabriqués, ce qui permet de former un appui continu avec des blocs d'appui sur des pieux dont les sommets restent au-dessus du niveau du sol avec des hauteurs inégales.

Cependant, cette mise en oeuvre est plus onéreuse et fastidieuse que celle des vis de fondation.

Le document EP 2 602 405 A1 concerne un ensemble de vis de fondation, chaque vis étant constitué de deux éléments: un élément terminé par une extrémité conique creuse filetée extérieurement selon un filet hélicoïdal continu constituant une zone de forage et filetée intérieurement selon un pas plus fin pour recevoir un élément de support comprenant une vis permettant le réglable en hauteur de la vis de fondation.

Le document JP2013194365A divulgue une structure de vis de fondation dans laquelle un ajustement de l'élément de construction peut être réalisé en hauteur mais également à l'horizontale dans les deux directions orthogonales. L'ajustement en hauteur est réalisé grâce à une vis d'ajustement alors que l'ajustement horizontal utilise une vis pouvant coulisser dans une ouverture oblongue. Deux types d'ouvertures oblongues dirigées dans les deux directions orthogonales permettent un ajustement fin à l'horizontale de la position de l'élément de construction.

Il existe un besoin de pouvoir ajuster un élément de construction après la pose non seulement dans la direction verticale et horizontale mais également selon un angle d'inclinaison par rapport au plan horizontal. Aucun document de l'état de la technique ne décrit un tel ajustement.

### Buts de l'invention

L'invention vise à fournir une patte de fixation pour support fileté intérieurement ne présentant pas les inconvénients de l'état de la technique.

En particulier, l'invention a pour but de proposer une patte de fixation permettant un ajustement précis de l'élément de construction après sa pose dans la direction verticale mais également selon un angle par rapport au plan horizontal.

### Principaux éléments caractéristiques de l'invention

Un premier aspect de l'invention se rapporte à une patte de fixation pour élément de construction, de préférence une poutre, un panneau ou une dalle, ajustable verticalement et par rapport à l'horizontale, apte à être vissée à un support fileté intérieurement, de préférence une vis de fondation, comprenant successivement :
- une vis de fixation comportant une tête avec chanfrein et une tige filetée ;
- une plaque métallique percée d'une ouverture avec chanfrein apte à accueillir ladite vis de fixation et comprenant des moyens de fixation à l'élément de construction;
- un joint souple perforé ;
- une vis comprenant une tête usinée avec chanfrein et avec un filet intérieur correspondant à celui de ladite vis de fixation; de manière telle que la position de la vis relativement au support, obtenu par vissage/dévissage, permet un ajustement vertical de la plaque métallique;
caractérisée en ce que la vis de fixation, l'ouverture avec chanfrein de la plaque métallique et le joint souple coopèrent pour permettre un ajustement angulaire de la plaque métallique par rapport au plan horizontal.

Selon des modes d'exécution préférés de l'invention, la patte de fixation comportera au moins une, ou encore une combinaison appropriée, des caractéristiques suivantes :
- l'angle d'inclinaison du chanfrein de la vis de fixation est supérieur ou égal à l'angle d'inclinaison du chanfrein de l'ouverture de la plaque métallique;
- le diamètre de l'ouverture de la plaque métallique, chanfrein compris est supérieur au diamètre maximal de la tête de la vis de fixation;
- la plaque métallique présente une courbure vers le bas comprise entre 0,1 et 2 mm, de préférence de 1 mm ;
- le joint souple est constitué d'au moins deux polymères différents, de préférence respectivement le polyamide et l'EDPM ;
- le joint souple est constitué d'au moins deux couches de polymères différents, de préférence trois couches ;
- la vis de fixation est une vis à empreinte hexagonale, de préférence en acier inoxydable ou en acier galvanisé ;
- la vis de fixation comporte un chanfrein d'angle d'inclinaison compris entre 30° et 50°, de préférence de 45° ;
- la vis est une vis à tête hexagonale ;
- la patte de fixation est apte à un ajustement angulaire par rapport au plan horizontal s'opérant selon un angle compris entre 0° et 20°, de préférence entre 5° et 15° ;
- la patte de fixation est apte à un ajustement vertical compris entre 0 et 10 cm ;
- la patte de fixation comporte en outre un accessoire pour la plaque métallique comprenant un rabat vertical et un plat horizontal recourbé apte à accueillir la plaque métallique perforée. De préférence, le rabat vertical et le plat horizontal forment un angle compris entre 80° et 100°.

Un deuxième aspect de l'invention se rapporte à une vis de fondation montée avec une patte de fixation comme ci-dessus.

Un troisième aspect de l'invention se rapporte à une utilisation d'une patte de fixation comme ci-dessus avec vis de fondation pour la fabrication/le montage de terrasses, d'abris de jardin ou de panneaux solaires.

Un quatrième aspect de l'invention se rapporte à un procédé de montage d'une patte de fixation, telle que décrite ci-dessus, pour élément de construction, apte à être vissée à un support fileté intérieurement, de préférence une vis de fondation, comprenant les étapes de :
- fixer dans le sol un support fileté intérieurement;
- visser une vis comprenant une tête usinée avec chanfrein et avec filet intérieur dans le support, dans une position relative de la vis et du support qui permet un ajustement vertical de la patte de fixation;
- placer un joint souple perforé en le centrant par rapport à l'usinage de la tête de vis;
- placer une plaque métallique percée d'une ouverture avec chanfrein sur le joint souple ;
- solidariser la plaque métallique à la vis comprenant une tête usinée avec chanfrein au moyen d'une vis de fixation comportant une tête avec chanfrein traversant la plaque métallique, le joint souple perforé et se vissant dans le filet intérieur de la vis, en déplaçant, préalablement à la fixation, latéralement le chanfrein de la vis de fixation par rapport au chanfrein de la plaque métallique, de manière à ajuster l'inclinaison de la plaque métallique par rapport au plan horizontal selon un angle compris entre 0 et 20°.

### Brève description des figures

La figure 1 est une vue en coupe d'une patte de fixation à visser dans un support, selon l'invention. Cette structure comporte une vis à tête filetée intérieurement (figure 2), un joint souple (figure 3), une plaque métallique perforée (figure 4) et une vis de fixation (figure 5).

La figure 2 représente une vue en perspective (figure 2A), en élévation (figure 2B) et en coupe (figure 2C) d'une vis comportant une tête usinée avec filet.

La figure 3 représente une vue en plan (figure 3A) et en coupe (figure 3B) d'un joint souple.

La figure 4 représente une vue en plan (figure 4A) et en coupe (figure 4B) d'une plaque métallique apte à recevoir un élément de construction telle qu'une lambourde par exemple.

La figure 5 représente une vue en élévation d'une vis de fixation apte à se visser dans la tête de vis filetée de la figure 2 et pouvant s'insérer dans l'orifice du joint souple et de la plaque métallique représentées aux figures 3 et 4 respectivement.

Les figures 6A, 6B et 6C représentent différentes vues d'un accessoire permettant d'y glisser la plaque métallique et apte à être fixé latéralement à un élément de construction.

La figure 7 est une vue en perspective d'une patte de fixation selon l'invention vissée dans une vis de fondation selon un angle de 0° par rapport à l'horizontale (figure 7A) ou selon un angle de 10° par rapport à l'horizontale (figure 7B).

La figure 8 est une vue en perspective d'une patte de fixation selon l'invention comprenant une plaque métallique légèrement courbée vers le bas.

La figure 9 est une vue en perspective d'une patte de fixation selon l'invention dont la plaque métallique est munie d'un accessoire permettant le vissage latéral de l'élément de construction.

### Description d'une forme d'exécution préférée de l'invention

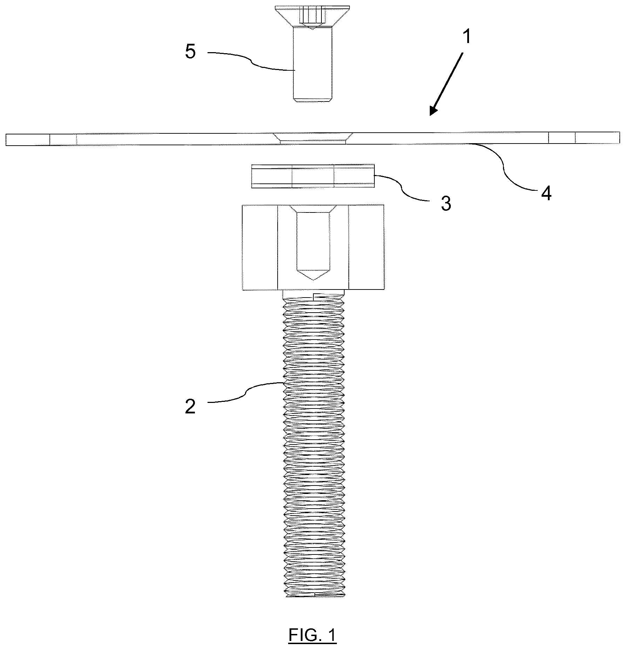

L'invention est exposée plus en détail à la suite à l'aide des figures 1 à 9.

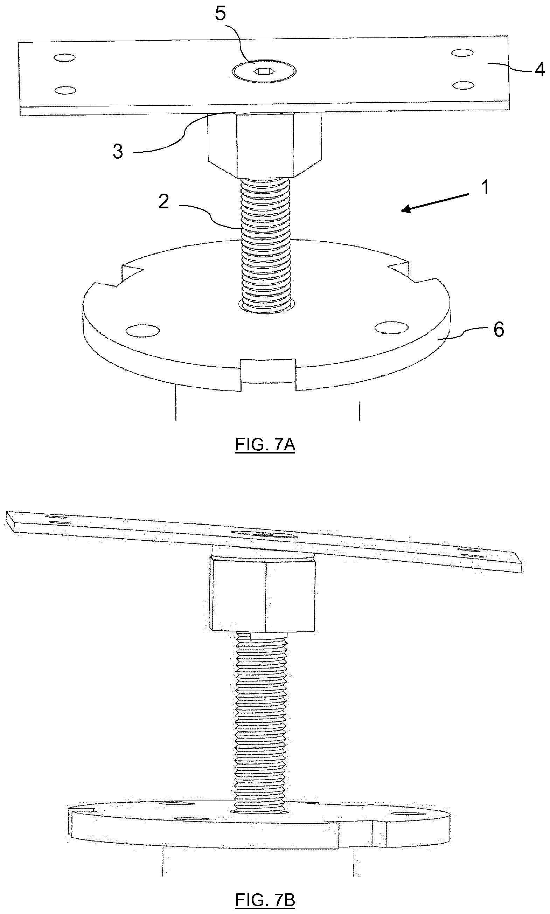

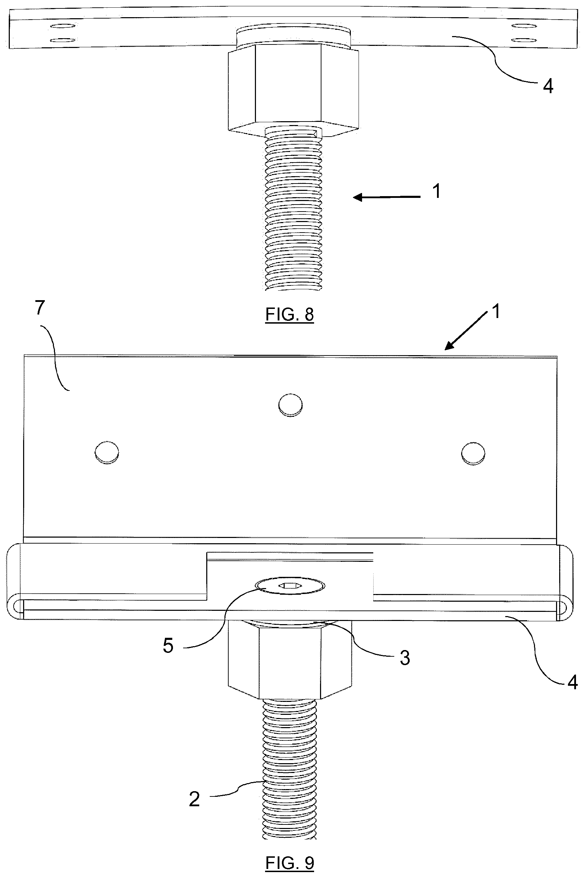

La figure 1 représente un exemple de patte de fixation 1 pour support 6 fileté intérieurement selon l'invention (voir figures 7 et 9). Le support 6 est de préférence une vis de fondation. Il n'est cependant pas limité à une vis de fondation, il peut aussi correspondre à n'importe quel support métallique ou en plastique pouvant accueillir une pièce filetée.

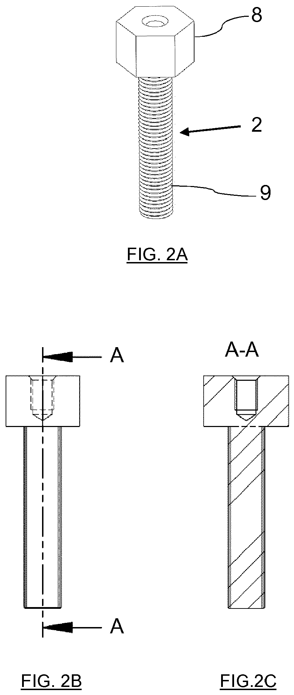

La figure 2A représente une vue en perspective de la vis 2 à tête filetée intérieurement apte à être vissée par ailleurs, grâce à son filet externe, dans un support 6 fileté intérieurement. Elle présente une tête 8 hexagonale et un filet externe 9. Un exemple de vis 2 représentative de l'invention est une vis M16 (16 mm de diamètre) avec tête 8 hexagonale de 32 mm de diamètre usinée avec un filet M10 (10 mm de diamètre). La vis 2 est réalisée en acier avec électro-zingage de 15 µm couvrant l'entièreté de la pièce. La figure 2B fournit une vue de profil de la vis 2 et la figure 2C représente une vue en coupe selon la section A-A. La tête hexagonale est filetée intérieurement sur 15 mm et présente un chanfrein incliné de 45° par rapport à l'horizontale sur 2 mm de profondeur.

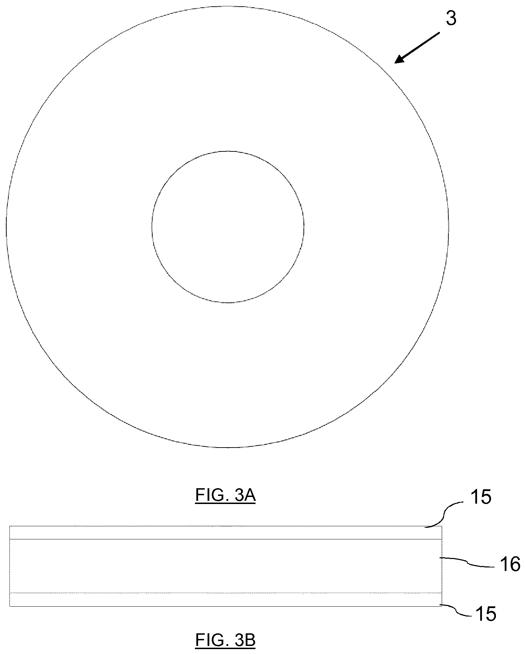

La figure 3A représente une vue de détail et du dessus du joint souple 3. Il présente une ouverture centrale de 12 mm de diamètre. C'est la nature souple du joint qui va permettre un ajustement angulaire de la plaque métallique 4 par rapport à l'horizontale. Une vue en coupe du joint souple 3 est montrée à la figure 3B. Dans cette illustration, le joint présente trois couches, une couche centrale 16 de 3 à 5 mm d'épaisseur et deux couches externes 15 de 1 mm chacune. Dans cet exemple, l'épaisseur totale du joint est comprise entre 5 et 7 mm. Les polymères utilisés sont de préférence du polyamide à l'extérieur et de l'EDPM (éthylène-propylène-diène monomère) au centre.

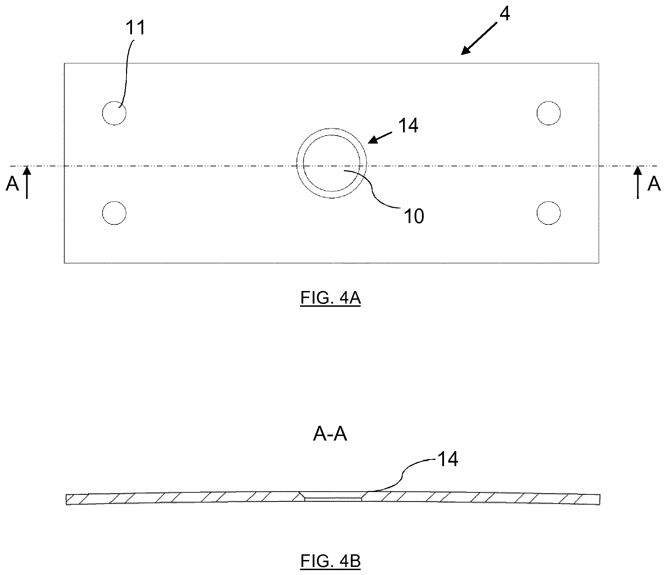

La plaque métallique 4 est représentée à figure 4A en vue du dessus. Elle présente un orifice central 10 de 17 mm de diamètre pour permettre le passage de la vis de fixation 5. La plaque présente également des orifices 11 en périphérie pour permettre la fixation de la plaque à un élément de construction tel qu'une poutre ou une lambourde par exemple en bois. L'élément de construction est fixé sur le dessus de la plaque métallique au moyen de vis introduites dans les orifices 11 par le dessous de la plaque métallique 4. La figure 4B représente une vue en coupe selon la section A-A, c'est-à-dire au niveau de son orifice central 10. Cet orifice comporte un chanfrein 14 incliné par exemple de 45° par rapport à l'horizontale sur 2 mm de profondeur correspondant exactement ou non au chanfrein 13 de la tête de vis de fixation 5. La figure 4B montre également que la plaque métallique 4 est légèrement courbée ou cintrée vers le bas sur environ 1 mm. Cette distance représente l'écartement de la plaque à son extrémité par rapport à l'horizontale. Cette caractéristique a pour but de faciliter la connexion avec le support 6 et d'éviter qu'il ne bouge grâce à un effet ressort.

L'élément de construction n'est cependant pas limité à une pièce de bois telle qu'une lambourde ou une poutre. Il peut être constitué de bois, de métal, de polymère ou d'un mélange de ces composants selon les besoins de l'utilisateur. Il est bien entendu que la plaque métallique 4 n'est pas limitée à la forme d'exécution présentée à la figure 4. Des variantes à portée de l'homme du métier existent afin d'adapter cette pièce aux dimensions et composants de l'élément de construction qui lui est fixé.

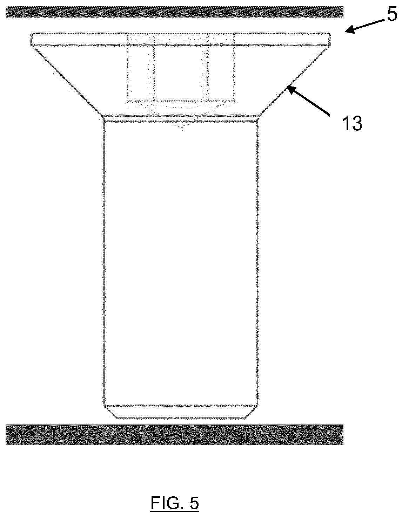

La figure 5 représente une vis de fixation 5 de profil (en élévation) apte à être vissée dans la vis 2 à tête filetée. Cette vis de fixation 5 est de préférence une vis à empreinte hexagonale (six pans creux) dite HC (hexagonale creuse) ou vis Allen.

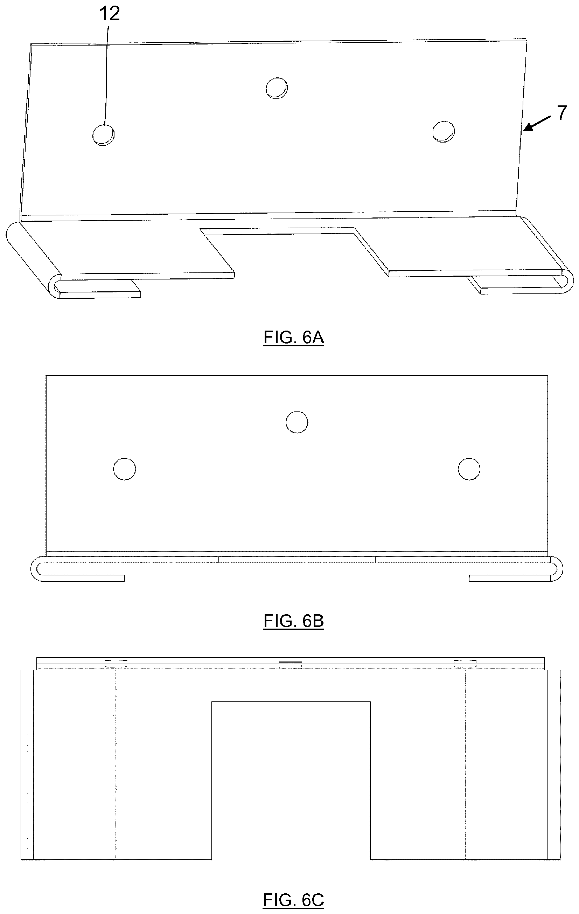

La figure 6A est une vue en perspective d'un accessoire 7 pour adaptation sur la plaque métallique 4. L'élément de construction est généralement fixé sur le dessus de la plaque métallique au moyen de vis introduites dans les orifices 11 par le dessous de la plaque métallique 4. Cependant, lorsque l'espace sous la plaque est insuffisant pour introduire les vis permettant de fixer l'élément de construction, l'accessoire 7 apporte une solution à ce problème en permettant de fixer l'élément de construction au moyen de vis introduites latéralement. Il est de préférence réalisé à partir d'une plaque en métal inoxydable pliée et usinée. Cet accessoire 7 comporte un rabat vertical, représenté à la figure 6B, comprenant des orifices 12 permettant la fixation d'un élément de construction latéralement et un plat horizontal, représenté à la figure 6C, recourbé apte à accueillir la plaque métallique 4 perforée qui peut s'y glisser. Le plat horizontal comporte également un espace vide correspondant à la perforation centrale 10 de la plaque métallique 4. L'angle formé entre le rabat vertical et le plat horizontal de l'accessoire 7 est légèrement inférieur à 90°, de l'ordre de 88°. Lorsque l'élément de construction est fixé au rabat vertical, le rabat se redresse et forme un angle droit avec le plat horizontal.

La figure 7 illustre le montage complet de la patte de fixation 1 dans un support 6 respectivement sans inclinaison par rapport à l'horizontale (Figure 7A) et selon une inclinaison de 10° (figure 7B). Le principe de l'ajustement angulaire par rapport au plan horizontal est le suivant : le chanfrein 14 de l'orifice central de la plaque métallique 4 est par exemple identique à celui de la vis de fixation 5 et est de 45°. La vis de fixation 5 est assemblée avec la vis à tête filetée 2 et bloquée en butée à fond de filet. Le joint souple 3 est alors comprimé de manière précise. Lors de l'inclinaison de la plaque (figure 7B), le joint souple 3 va se comprimer du côté de l'inclinaison tout en assurant la stabilité de la plaque métallique 4, la tête fraisée de la vis de fixation 5 pivotant dans le chanfrein 14 de l'orifice central de la plaque métallique 4. Ce pivotement est possible si le diamètre de l'orifice central 10 de la plaque métallique 4 (chanfrein 14 compris) est supérieur au diamètre maximal de la tête de la vis de fixation 5.

La figure 7 illustre également comment la patte de fixation 1 peut être ajustée verticalement. C'est le vissage ou le dévissage de la vis à tête filetée 2 dans le support 6 qui permet cet ajustement en hauteur. Le support 6 est par exemple une vis de fondation 6 telle que divulgué dans le document US 2011/0250977 A1 de la société Terrafix. Sa longueur est en général comprise entre 0,5 et 2 m.

La figure 8 montre une vue en perspective de la patte de fixation 1 dans laquelle la plaque métallique 4 présente une légère courbure vers le bas (voir figure 4B).

La figure 9 représente une patte de fixation 1 selon l'invention dans laquelle la plaque métallique 4 est glissée dans le plat horizontal recourbé d'un accessoire 7 comme présenté à la figure 6. Cet accessoire 7 permet le vissage latéral de l'élément de construction lorsque l'espace sous la plaque métallique est limité.

Il est bien entendu que les modes de réalisation représentés schématiquement aux figures 1 à 9 et décrits ci-avant ne sont que des exemples de réalisation nullement limitatifs et que des variantes peuvent y être apportées par l'homme du métier sans sortir du cadre des revendications.

### Principaux avantages de l'invention

En outre, l'invention apporte plusieurs avantages qui sont résumés ci-après :
- la patte de fixation selon l'invention permet une isolation acoustique au niveau de l'élément de construction grâce à la présence du joint souple ;
- la patte de fixation rend possible un ajustement vertical précis de l'élément de construction, cet ajustement pouvant être réalisé avant ou après la pose de l'élément de construction ;
- la patte de fixation permet un ajustement précis de l'élément de construction selon un certain angle par rapport au plan horizontal ;
- la précision de l'ajustement vertical et par rapport au plan horizontal est de 0,5 mm.

### Liste des symboles de référence

- 1.: Patte de fondation
- 2.: Vis à tête filetée
- 3.: Joint souple
- 4.: Plaque métallique perforée
- 5.: Vis de fixation
- 6.: Support fileté intérieurement
- 7.: Accessoire pour plaque métallique
- 8.: Tête de vis de la vis filetée
- 9.: Filet de la vis filetée
- 10.: Orifice central de la plaque métallique
- 11.: Orifice pour fixation à l'élément de construction sur la plaque métallique
- 12.: Orifice pour fixation à l'élément de construction sur l'accessoire pour plaque métallique
- 13.: Chanfrein de la vis de fixation
- 14.: Chanfrein de la plaque métallique perforée
- 15.: Couche externe du joint souple
- 16.: Couche centrale du joint souple

## Revendications

1. Patte de fixation (1) pour élément de construction, de préférence une poutre, un panneau ou une dalle, ajustable verticalement et par rapport à l'horizontale, apte à être vissée à un support (6) fileté intérieurement, de préférence une vis de fondation, comprenant successivement :
- une vis de fixation (5) comportant une tête avec chanfrein (13) et une tige filetée ;
- une plaque métallique (4) percée d'une ouverture avec chanfrein (14) apte à accueillir ladite vis de fixation (5) et comprenant des moyens de fixation à l'élément de construction;
- un joint souple (3) perforé ;
- **caractérisée par** une vis (2) comprenant une tête usinée avec chanfrein et avec un filet intérieur correspondant à celui de ladite vis de fixation (5) ; de manière telle que la position de la vis (2) relativement au support (6), obtenu par vissage/dévissage, permet un ajustement vertical de la plaque métallique (4) ; où la vis de fixation (5), l'ouverture avec chanfrein de la plaque métallique (4) et le joint souple (3) coopèrent pour permettre un ajustement angulaire de la plaque métallique (4) par rapport au plan horizontal.

2. Patte de fixation selon la revendication 1, **caractérisée en ce que** l'angle d'inclinaison du chanfrein (13) de la vis de fixation (5) est supérieur ou égal à l'angle d'inclinaison du chanfrein (14) de l'ouverture de la plaque métallique (4).

3. Patte de fixation selon la revendication 1 ou 2, **caractérisée en ce que** le diamètre de l'ouverture de la plaque métallique (4), chanfrein (14) compris est supérieur au diamètre maximal de la tête de la vis de fixation (5).

4. Patte de fixation selon l'une quelconque des revendications précédentes, **caractérisée en ce que** la plaque métallique (4) présente une courbure vers le bas comprise entre 0,1 et 2 mm, de préférence de 1 mm.

5. Patte de fixation selon l'une quelconque des revendications précédentes, **caractérisée en ce que** le joint souple (3) est constitué d'au moins deux polymères différents, de préférence respectivement le polyamide et l'EDPM.

6. Patte de fixation selon l'une quelconque des revendications précédentes, **caractérisée en ce que** le joint souple (3) est constitué d'au moins deux couches (15, 16) de polymères différents, de préférence trois couches.

7. Patte de fixation selon l'une quelconque des revendications précédentes, **caractérisée en ce que** la vis de fixation (5) est une vis à empreinte hexagonale, de préférence en acier inoxydable ou en acier galvanisé.

8. Patte de fixation selon l'une quelconque des revendications précédentes, **caractérisée en ce que** la vis de fixation (5) comporte un chanfrein d'angle d'inclinaison compris entre 30° et 50°, de préférence de 45°.

9. Patte de fixation selon l'une quelconque des revendications précédentes, **caractérisée en ce que** la vis (2) est une vis à tête hexagonale.

10. Patte de fixation selon l'une quelconque des revendications précédentes, **caractérisée en ce qu'**elle est apte à un ajustement angulaire par rapport au plan horizontal s'opérant selon un angle compris entre 0° et 20°, de préférence entre 5° et 15°.

11. Patte de fixation selon l'une quelconque des revendications précédentes, **caractérisée en ce qu'**elle est apte à un ajustement vertical compris entre 0 et 10 cm.

12. Patte de fixation selon l'une quelconque des revendications précédentes, **caractérisée en ce qu'**elle comporte en outre un accessoire (7) pour la plaque métallique (4) comprenant un rabat vertical et un plat horizontal recourbé apte à accueillir la plaque métallique (4) perforée.

13. Patte de fixation selon la revendication 11, **caractérisée** en ce le rabat vertical et le plat horizontal forment un angle compris entre 80° et 100°.

14. Vis de fondation montée avec une patte de fixation (1), selon l'une quelconque des revendications 1 à 12.

15. Utilisation d'une patte de fixation (1) avec vis de fondation, selon l'une quelconque des revendications 1 à 13, pour la fabrication/le montage de terrasses, d'abris de jardin ou de panneaux solaires.

16. Procédé de montage d'une patte de fixation (1) pour élément de construction, apte à être vissée à un support (6) fileté intérieurement, de préférence une vis de fondation, selon l'une quelconque des revendications 1 à 13, comprenant les étapes de :
- fixer dans le sol un support (6) fileté intérieurement;
- visser une vis (2) comprenant une tête usinée avec chanfrein et avec filet intérieur dans le support (6), dans une position relative de la vis (2) et du support (6) qui permet un ajustement vertical de la patte de fixation (1) ;
- placer un joint souple (3) perforé en le centrant par rapport à l'usinage de la tête de vis (2) ;
- placer une plaque métallique (4) percée d'une ouverture avec chanfrein (14) sur le joint souple (3) ;
- solidariser la plaque métallique (4) à la vis (2) comprenant une tête usinée avec chanfrein au moyen d'une vis de fixation (5) comportant une tête avec chanfrein (13) traversant la plaque métallique (4), le joint souple (3) perforé et se vissant dans le filet intérieur de la vis (2), en déplaçant, préalablement à la fixation, latéralement le chanfrein (13) de la vis de fixation (5) par rapport au chanfrein (14) de la plaque métallique (4), de manière à ajuster l'inclinaison de la plaque métallique (4) par rapport au plan horizontal selon un angle compris entre 0 et 20°.

## Patentansprüche

1. Befestigungsklammer (1) für Bauelement, vorzugsweise eines Balkens, eines Panels oder einer Platte, ausrichtbar vertikal und in Bezug auf die Horizontale, die imstande ist, mit einer Halterung (6) mit Innengewinde, vorzugsweise einer Fundamentschraube, verschraubt zu sein, umfassend aufeinanderfolgend:
- eine Befestigungsschraube (5), aufweisend einen Kopf mit Schräge (13) und einen Gewindeschaft;
- eine Metallplatte (4), durchbrochen von einer Öffnung mit Schräge (14), die imstande ist, die Befestigungsschraube (5) aufzunehmen und umfassend Befestigungsmittel am Bauelement;
- eine perforierte elastische Dichtung (3);
**gekennzeichnet durch** eine Schraube (2), umfassend einen Kopf, gefertigt mit Schräge und mit einem Innengewinde, das dem der Befestigungsschraube (5) derart entspricht, dass die Position der Schraube (2) relativ zu der Halterung (6), erhalten durch Verschrauben/Lösen der Verschraubung, eine vertikale Ausrichtung der Metallplatte (4) erlaubt;
wobei die Befestigungsschraube (5), die Öffnung mit Schräge der Metallplatte (4) und die elastische Dichtung (3) zusammenwirken, um eine Winkelausrichtung der Metallplatte (4) in Bezug zu der horizontalen Ebene zu erlauben.

2. Befestigungsklammer nach Anspruch 1, **dadurch gekennzeichnet, dass** der Neigungswinkel der Schräge (13) der Befestigungsschraube (5) größer oder gleich dem Neigungswinkel der Schräge (14) der Öffnung der Metallplatte (4) ist.

3. Befestigungsklammer nach Anspruch 1 oder 2, **dadurch gekennzeichnet, dass** der Durchmesser der Öffnung der Metallplatte (4), Schräge (14) inbegriffen, größer als der maximale Durchmesser des Kopfs der Befestigungsschraube (5) ist.

4. Befestigungsklammer nach einem der vorangehenden Ansprüche, **dadurch gekennzeichnet, dass** die Metallplatte (4) eine Krümmung nach unten zwischen 0,1 und 2 mm inklusive, vorzugsweise von 1 mm, aufweist.

5. Befestigungsklammer nach einem der vorangehenden Ansprüche, **dadurch gekennzeichnet, dass** die elastische Dichtung (3) von mindestens zwei unterschiedlichen Polymeren gebildet ist, vorzugsweise jeweils von dem Polyamid und dem EDPM.

6. Befestigungsklammer nach einem der vorangehenden Ansprüche, **dadurch gekennzeichnet, dass** die elastische Dichtung (3) von mindestens zwei Schichten (15, 16) unterschiedlicher Polymere, vorzugsweise drei Schichten, gebildet ist.

7. Befestigungsklammer nach einem der vorangehenden Ansprüche, **dadurch gekennzeichnet, dass** die Befestigungsschraube (5) eine Schraube mit Sechskantabdruck ist, vorzugsweise aus nichtrostendem Stahl oder aus galvanisiertem Stahl.

8. Befestigungsklammer nach einem der vorangehenden Ansprüche, **dadurch gekennzeichnet, dass** die Befestigungsschraube (5) eine Schräge mit Neigungswinkel zwischen 30° und 50° inklusive, vorzugsweise von 45°, aufweist.

9. Befestigungsklammer nach einem der vorangehenden Ansprüche, **dadurch gekennzeichnet, dass** die Schraube (2) eine Sechskantschraube ist.

10. Befestigungsklammer nach einem der vorangehenden Ansprüche, **dadurch gekennzeichnet, dass** sie zu einer Winkelausrichtung in Bezug zu der horizontalen Ebene imstande ist, die gemäß einem Winkel zwischen 0° und 20°, vorzugsweise zwischen 5° und 15°, erfolgt.

11. Befestigungsklammer nach einem der vorangehenden Ansprüche, **dadurch gekennzeichnet, dass** sie für eine vertikale Ausrichtung zwischen 0 und 10 cm inklusive imstande ist.

12. Befestigungsklammer nach einem der vorangehenden Ansprüche, **dadurch gekennzeichnet, dass** sie ferner ein Zubehör (7) für die Metallplatte (4) aufweist, umfassend eine vertikale Lasche und eine gebogene horizontale Fläche, die imstande ist, die perforierte Metallplatte (4) zu empfangen.

13. Befestigungsklammer nach Anspruch 11, **dadurch gekennzeichnet, dass** die vertikale Lasche und die horizontale Fläche einen Winkel zwischen 80° und 100° inklusive bilden.

14. Fundamentschraube, montiert mit einer Befestigungsklammer (1) nach einem der Ansprüche 1 bis 12.

15. Verwendung einer Befestigungsklammer (1) mit Fundamentschraube nach einem der Ansprüche 1 bis 13 für die Herstellung/die Montage von Terrassen, Gartenhäuschen oder Solarpanelen.

16. Verfahren zur Montage einer Befestigungsklammer (1) für Bauelement, die imstande ist, mit einer Halterung (6) mit Innengewinde, vorzugsweise einer Fundamentschraube nach einem der Ansprüche 1 bis 13, verschraubt zu sein, umfassend die Schritte:
- Befestigen im Boden einer Halterung (6) mit Innengewinde;
- Schrauben einer Schraube (2), umfassend einen Kopf, gefertigt mit Schräge und mit Innengewinde, in die Halterung (6), in einer relativen Position der Schraube (2) und der Halterung (6), die eine vertikale Ausrichtung der Befestigungsklammer (1) erlaubt;
- Platzieren einer perforierten elastischen Dichtung (3) bei deren Zentrierung in Bezug zur Fertigung des Kopfs der Schraube (2);
- Platzieren einer Metallplatte (4) mit Öffnung mit Schräge (14) auf die elastische Dichtung (3);
- festes Verbinden der Metallplatte (4) mit der Schraube (2), umfassend einen Kopf mit Schräge, mittels einer Befestigungsschraube (5), aufweisend einen Kopf mit Schräge (13), welche die Metallplatte (4), die perforierte elastische Dichtung (3) durchquert und sich in das Innengewinde der Schraube (2) verschraubt, bei seitlicher Verlagerung, vor der Befestigung, der Schräge (13) der Befestigungsschraube (5) in Bezug zur Schräge (14) der Metallplatte (4), um die Neigung der Metallplatte (4) in Bezug zur horizontalen Ebene gemäß einem Winkel zwischen 0 und 20° inklusive auszurichten.

## Claims

1. Fastening tab (1) for a construction element, preferably a beam, a panel or slab, that is adjustable vertically and relative to the horizontal, that can be screwed to a support with inner thread (6), preferably a foundation screw, successively comprising:
- a fastening screw (5) comprising a beveled head (13) and a threaded shank;
- a metal plate (4) pierced with a beveled opening (14) that can accommodate said fastening screw (5) and comprises fastening means to the construction element;
- a perforated flexible joint (3);
- **characterized by** a screw (2) comprising a machined beveled head with an inner thread corresponding to that of said fastening screw (5); such that the position of the screw (2) relative to the support (6), obtained by screwing/unscrewing, allows vertical adjustment of the metal plate (4);
or by the fastening screw (5), the beveled aperture of the metal plate (4) and the flexible joint (3) cooperate to allow angular adjustment of the metal plate (4) relative to the horizontal plane.

2. The fastening tab according to Claim 1, **characterized in that** the inclination angle of the bevel (13) of the fastening screw (5) is greater than or equal to the inclination angle of the bevel (14) of the aperture of the metal plate (4).

3. The fastening tab according to Claim 1 or 2, **characterized in that** diameter of the aperture of the metal plate (4), including the bevel (14), is larger than the maximum diameter of the head of the fastening screw (5).

4. The fastening tab according to any one of the preceding claims, **characterized in that** the metal plate (4) has a downward curvature comprised between 0.1 and 2 mm, preferably 1 mm.

5. The fastening tab according to any one of the preceding claims, **characterized in that** the flexible joint (3) is made from at least two different polymers, preferably polyamide and EPDM, respectively.

6. The fastening tab according to any one of the preceding claims, **characterized in that** the flexible joint (3) is made from at least two different polymer layers (15, 16), preferably three layers.

7. The fastening tab according to any one of the preceding claims, **characterized in that** the fastening screw (5) is a screw with a hexagonal imprint, preferably made from stainless steel or galvanized steel.

8. The fastening tab according to any one of the preceding claims, **characterized in that** the fastening screw (5) comprises a bevel with an inclination angle comprised between 30° and 50°, preferably 45°.

9. The fastening tab according to any one of the preceding claims, **characterized in that** the screw (2) is a hexagonal head screw.

10. The fastening tab according to any one of the preceding claims, **characterized in that** it can be angularly adjusted relative to the horizontal plane according to an angle comprised between 0° and 20°, preferably between 5° and 15°.

11. The fastening tab according to any one of the preceding claims, **characterized in that** it can be vertically adjusted by between 0 and 10 cm.

12. The fastening tab according to any one of the preceding claims, **characterized in that** it further comprises an accessory (7) for the metal plate (4) comprising a vertical flap and a curved horizontal flat that can accommodate the perforated metal plate (4).

13. The fastening tab according to Claim 11, **characterized in that** the vertical flap and the horizontal flat form an angle comprised between 80° and 100°.

14. Foundation screw mounted with a fastening tab (1) according to any one of Claims 1 to 12.

15. Use of a fastening tab (1) with foundation screw, according to any one of Claims 1 to 13, for manufacturing/mounting terraces, garden sheds or solar panels.

16. Method for mounting a fastening tab (1) for a construction element, that can be screwed to a support with inner thread (6), preferably a foundation screw, according to any one of Claims 1 to 13, comprising the following steps:
- fastening a support with inner thread (6) in the ground;
- screwing in the support (6) a screw (2) comprising a machined beveled head with an inner thread, in a relative position of the screw (2) and the support (6) that allows vertical adjustment of the fastening tab (1);
- laying a perforated flexible joint (3) by centering it relative to the machining of the screw head (2);
- laying a metal plate (4) pierced with a beveled aperture (14) on the flexible joint (3);
- securing the metal plate (4) to the screw (2) comprising a machined beveled head using a fastening screw (5) comprising a beveled head (13) traversing the metal plate (4), the perforated flexible joint (3) being screwed into the inner thread of the screw (2), while moving the bevel (13) of the fastening screw (5) sideways, before fastening, relative to the bevel (14) of the metal plate (4), so as to adjust the inclination of the metal plate (4) relative to the horizontal plane by an angle comprised between 0 and 20°.
